(19) **Europäisches Patentamt**
**European Patent Office**
**Office européen des brevets**

(11) **EP 4 318 329 A1**

(12) **EUROPEAN PATENT APPLICATION**

(43) Date of publication:
**07.02.2024 Bulletin 2024/06**

(21) Application number: **22188223.6**

(22) Date of filing: **02.08.2022**

(51) International Patent Classification (IPC):
**G06N 10/40** (2022.01)

(52) Cooperative Patent Classification (CPC):
**G06N 10/40**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **ETH Zurich**
**8092 Zurich (CH)**

(72) Inventors:
- **ESSLINGER, Tilman**
  **8006 Zurich (CH)**
- **WILI, Simon**
  **8050 Zurich (CH)**
- **VIEBAHN, Konrad**
  **8006 Zurich (CH)**

(54) **METHOD AND SETUP FOR CHANGING AN INTER-PARTICLE DISTANCE**

(57) A method for changing an inter-particle distance (D) between particles (1) arranged in a particle array (2) is provided, the method comprises creating a primary optical lattice (10), loading the particles (1) into the primary optical lattice (10) such that the particles (1) are trapped in the primary optical lattice (10), changing a primary-lattice spacing (L1) of the primary optical lattice (10) to change the inter-particle distance (D), creating an auxiliary optical lattice (20), ramping up the auxiliary-lattice and ramping down the primary optical lattice until the particles (1) are trapped in the auxiliary optical lattice (20), setting the primary-lattice spacing (L1) to a different primary-lattice spacing value, ramping up the primary-lattice and ramping down the auxiliary lattice (20) until the particles are trapped in the primary optical lattice (10) again.

FIG. 5

EP 4 318 329 A1

**Description**

TECHNICAL FIELD

The present invention relates to a method for changing an inter-particle distance between particles arranged in a particle array by means of optical lattices and an optical setup for performing said method.

PRIOR ART

Being able to handle small particles with high precision is an important requirement in many fields, such as in microbiology and in particular also in quantum technology. For instance, one promising approach to build a quantum computer comprises the use of cold atoms as qubits, i.e. the quantum versions of the classic binary bits. A qubit is a quantum mechanical system/unit, e.g. a neutral atom or an ion, that can be approximated as quantum mechanical two-level system where the two levels encode 1 and 0 respectively. Using atoms as qubits is promising as nature gives the experimentalist a practically unlimited number of fundamentally indistinguishable particles at hand. Samples of cold atoms may for instance be obtained using a magneto-optical trap (MOT). However, quantum-simulation and computation with cold atoms require large, defect-free arrays of cold atoms with unity filling, i.e. a periodic array of cold atoms that does not have any holes. The larger the array is, the more qubits are available, which tends to make the quantum computer less prone to errors. The creation of such arrays is a well-known, but challenging task. One method known in the art relies on so-called optical tweezers. The concept of optical tweezers is known in the art as a means to individually trap small particles and manipulate them. An optical tweezer may be generated by using a highly focused laser beam that exerts a force on the particle to trap it in the focus of said laser beam. Once trapped, the particle may be moved to a desired location by moving the laser beam accordingly. Thus, to create a defect-free particle array, the particles may be loaded from the MOT into an array of optical tweezers in a probabilistic manner, i.e. with the individual optical tweezer randomly contain either one atom or no atom, as described by S. Ebadi et al., "Quantum phases of matter on a 256-atom programmable quantum simulator", Nature 595, 227-232, (2021). DOI: 10.1038/s41586-021-03582-4. The tweezers that do not contain any atoms may then be switched off. Subsequently, the remaining optical tweezers are moved in space until the atoms trapped in the optical tweezers are finally arranged in the desired defect-free array of atoms. Such a process is very time consuming; in particular, the time required increases with the size of the array, while the atoms and/or their states in the tweezers have finite lifetimes, which is why such a process is not scalable to large arrays of atoms.

A faster way to obtain a defect-free array of particles is to create a so-called Mott insulator, which corresponds to a high-density, low-entropy state. Methods of obtaining a phase transition from a superfluid to a Mott insulator are known in the art. As for instance described by K. Kwon et al, "Site-resolved imaging of a bosonic Mott insulator of 7Li atoms", Phys. Rev. A 105, 033323, (2022), DOI: 10.1103/PhysRevA.105.033323, it is known to start with a cold gas of atoms at a temperature near to absolute zero - the superfluid state or "Bose-Einstein-condensate" - in a trap (e.g. optical or magnetic) and to slowly turn on an optical lattice that exhibits periodically arranged potential wells (i.e. potential minima), into which, due to inter-particle interactions, the atoms are then settling, yielding a periodic particle array. The process may be understood symbolically by picturing a bunch of marbles being picked up with an egg carton, wherein one marble settles in each cavity of said egg carton.

Although it is possible to obtain a defect-free array of atoms with said method, the inter-particle distance obtained in such a case is usually close to half the laser wavelength of the laser used to create the optical lattice, which is too small, by about a factor of 10, to perform many of the quantum computing operations desired in the art. In particular, the inter-particle distance is too small to access and manipulate the atoms on an individual level using optical tweezers.

An optical lattice is an interference pattern that may be created by overlapping a pair of coherent laser beams under an angle, wherein the lattice constant L is determined by the wavelength of the laser beams A and by the angle θ:

$$L = \frac{\lambda}{2 sin(\theta/2)}$$

By varying said angle θ, it is therefore possible to tune the lattice spacing. However, the tuning range may be limited, for instance by the numerical aperture of the optical elements used to focus the laser beams. Hence, the tuning range is usually not sufficient to obtain a sufficiently large spacing between the atoms trapped in said optical lattice to enable individual access to these atoms with optical tweezers.

SUMMARY OF THE INVENTION

In a first aspect, it is an object of the present invention to provide a method for changing an inter-particle distance between particles arranged in a particle array, which method enables continuously changing the inter-particle distance.

This object is achieved by a method for changing an inter-particle distance according to claim 1. Further embodiments of the invention are laid down in the dependent claims.

According to the first aspect of the invention, a method for changing an inter-particle distance between particles arranged in a particle array is provided. The method comprises

a) creating a primary optical lattice comprising periodically arranged optical potential minima spaced by a primary-lattice spacing and having a primary-lattice maximum potential depth;
b) loading the particles into the primary optical lattice such that the particles are trapped in the primary optical lattice;
c) changing the primary-lattice spacing to change the inter-particle distance;
d) creating an auxiliary optical lattice comprising periodically arranged optical potential minima spaced by an auxiliary-lattice spacing and having auxiliary-lattice maximum potential depth,
wherein the auxiliary optical lattice spatially overlaps with the primary optical lattice such that a plurality of the optical potential minima of the primary optical lattice is aligned with a plurality of the optical potential minima of the auxiliary lattice;
e) increasing the auxiliary-lattice maximum potential depth until the particles are trapped in the auxiliary optical lattice and decreasing the primary-lattice maximum potential depth until the primary-lattice maximum potential depth is smaller than a threshold potential depth at which the particles become trapped;
f) setting the primary-lattice spacing to a different primary-lattice spacing value at which a plurality of the optical potential minima of the primary optical lattice are again aligned with a plurality of the optical potential minima of the auxiliary lattice;
g) increasing the primary-lattice maximum potential depth until the particles are trapped in the primary optical lattice again and decreasing the auxiliary-lattice maximum potential depth until the auxiliary-lattice maximum potential depth is smaller than the threshold potential depth.

Step d) may not necessarily have to be carried out after step c), it may be carried out at any time before step e), provided that the auxiliary-lattice maximum potential depth during steps b) and c) is smaller than the threshold potential depth at which the particles become trapped. Step d) may in particular be carried out either simultaneously with step a) or directly after step a).

The term "threshold potential depth" refers to a value of the potential depth which the particles become trapped, in particular, at which the inter-particle distance changes when the optical lattice spacing is changed.

"Increasing" and "decreasing" the maximum potential depth may be carried out by slowly ramping the maximum potential depth up or down respectively, or by abruptly switching the maximum potential depth to a higher or a lower value respectively.

The primary optical lattice and the auxiliary optical lattice may each be either one-dimensional, two-dimensional or three-dimensional. An optical lattice is considered to be one-dimensional if its optical potential minima are arranged along a line. An optical lattice is considered to be two-dimensional if its optical potential minima are arranged in a two-dimensional array. An optical lattice is considered to be three-dimensional if its optical potential minima are arranged in a three-dimensional array.

Regardless of their dimensionality, the primary optical lattice and the auxiliary optical lattice are oriented relative to each other in such a way that a plurality of optical potential minima of the primary optical lattice coincides with a plurality of optical potential minima of the auxiliary lattice in step e) and step g). In a case where both the primary optical lattice and the auxiliary optical lattice are one-dimensional or where the primary and auxiliary optical lattices have identical spatial orientations, this may imply that the primary-lattice spacing is an integer multiple of the auxiliary-lattice spacing or vice versa in step e) and g).

In a two- or three-dimensional optical lattice, the lattice spacing may be the same in all spatial directions of may be different in different spatial directions. "Changing the primary-lattice spacing and/or the auxiliary-lattice spacing" may then refer to changing the lattice spacing in all spatial directions at once, or in two spatial directions at once or only in one spatial direction.

The expression "loading particles into an optical lattice" refers to any process that ultimately causes the particles to be trapped in said optical lattice. The particles may be initially loaded such that the inter-particle distance corresponds to the primary-lattice spacing, i.e. such that there are no "empty" optical potential minima of the primary optical lattice between the particles. Alternatively, there may initially be "empty" optical potential minima, i.e. optical potential minima in which no particle is trapped, that arranged between the trapped particles. In this case, the inter-particle distance preferably corresponds to an integer multiple of the primary-lattice spacing.

Since the particles are initially trapped in the primary optical lattice, a continuous change of the primary-lattice spacing leads to a continuous change of the inter-particle distance. Having an auxiliary lattice in addition to the primary optical lattice as described in steps a)-g) offers the possibility to set the primary-lattice spacing to a different primary-lattice spacing value without affecting the inter-particle distance, as the latter is now "pinned" by the auxiliary lattice.

The method may further comprise repeating at least step c) after step g), and/or may comprise, between steps e) and g), a step of changing the auxiliary-lattice spacing to change the particle distance.

The method may further comprise, after step g), a step of setting the auxiliary-lattice spacing to a different auxiliary-lattice spacing value.

The steps c) to g) including any step in between may be repeated an arbitrary number of times, preferably more than two times, to obtain an arbitrary inter-particle distance.

The primary-lattice spacing may be increased in step c) so that the inter-particle distance increases. Additionally, the auxiliary-lattice spacing may also be increased when the particles are trapped in the auxiliary lattice.

The inter-particle distance may thus be arbitrarily increased by either

only changing, in particular increasing, the primary-lattice spacing, wherein the auxiliary lattice is stationary in space and acts as a "pinning" optical lattice whenever the primary-lattice spacing is changed to a different value, for instance to its initial value, or

by changing, in particular increasing, both the primary-lattice spacing and the auxiliary-lattice spacing in an alternating manner, in which case both the primary optical lattice and the auxiliary optical lattice act as "scaling" optical lattices.

The particles being loaded into the primary optical lattice in step b) may be atoms, molecules (including small molecules and macromolecules), or more complex aggregate structures, including samples of biological material such as cells, viruses, or bacteria.

In a preferred embodiment, the particle array being loaded into the primary optical lattice in step b) is an array of atoms, preferably a defect-free array of atoms, preferably of atoms in their ground-state. In particular, the particle array may be a Mott insulator. In this context, the term "defect-free" is understood to refer to an array for which the ratio of the number of particles in the array to the number of defects in said array is larger than 20.

In order to force the atoms to form a periodic array, either the primary optical lattice or an additional array-generating optical lattice may be switched on, preferably slowly ramped up. The optical lattice used to force the atoms to form a periodic array typically has a lattice constant in the range between 100 nm and 1 $\mu$m, preferably between 250 nm and 500 nm.

In case the optical lattice used to generate the particle array in the first place is an additional array-generating optical lattice, the method may further comprise a step of transferring the particles from the array-generating optical lattice into the primary optical lattice.

The method may further comprise:

providing an array of multiple optical tweezers;
loading at least a portion of the particles in the particle array into the array of multiple optical tweezers.

Preferably, the number of optical tweezers is equal to the number of particles in the particle array such that each optical tweezer traps exactly one particle. However, in other embodiments, the array of multiple optical tweezers may comprise a number of optical tweezers that is smaller than the number of particles in the particle array.

In order save time, preferably all particles are loaded into the array of multiple optical tweezers at once, which is possible once steps of the method as described above may have been applied to increase the inter-particle distance so that it is sufficiently large for each particle to be individually accessible by one of the optical tweezers. Being able to load all particles simultaneously represents a strong advantage compared to methods where the particles are randomly loaded into the optical tweezers, which then have to be rearranged to form a particle array.

The method may further comprise performing a quantum computing operation using the particles trapped in the array of multiple optical tweezers. In particular in case the particles are atoms, the method may further comprise selecting individual particles in the particle array and inducing controlled dipole-dipole interactions between said selected individual particles to perform controlled gate operations. The method may in particular comprise using the strong dipole interactions facilitated by Rydberg states. An atom is said to be in a Rydberg state if the principal quantum number n of at least one electron is very large, in particular larger than 50. After the computation is completed, the method may comprise further increasing the inter-particle distance to allow for a faster readout (i.e. measurement) of the qubits. The rate at which readout operations can be performed currently represents a limitation of the computation speed of state-of-the-art quantum computers.

Preferably, the primary optical lattice is created by at least a first primary laser beam and a second primary laser beam crossing under a primary-lattice angle, and the auxiliary optical lattice is preferably created by at least a first auxiliary laser beam and a second auxiliary laser beam crossing under an auxiliary-lattice angle.

In order to create a one-dimensional primary optical lattice, ideally one first primary laser beam is crossed with one second primary lattice beam, the first primary laser beam and the second primary laser beam thereby defining a first propagation plane.

In order to create a two-dimensional primary optical lattice, a third primary laser beam may be crossed with a fourth primary laser beam, the third primary laser beam and the fourth primary laser beam thereby defining a second propagation plane that is inclined with respect to the first propagation plane, preferably perpendicular to the first propagation plane.

In order to create a three-dimensional primary optical lattice, a fifth primary laser beam may be crossed with a sixth primary laser beam, the fifth primary laser beam and the sixth primary laser beam defining a third propagation plane that is inclined with respect to the first propagation plane and the second propagation plane, preferably perpendicular to both the first propagation plane and the second propagation plane.

The same considerations of course apply mutatis mutandis for creating a one-, two-, or three-dimensional auxiliary optical lattice using auxiliary laser beams.

In the following, any statement concerning the first primary/auxiliary laser beam and the second primary/auxiliary laser beam applies mutatis mutandis to any additional pair of laser beams necessary to create an additional optical lattice dimension.

Furthermore, in addition to the primary optical lattice and the auxiliary optical lattice, the method may comprise creating additional optical lattices having the same dimensionality than the primary optical lattice and/or the auxiliary optical lattice, which may also be used as "pinning" lattices or as "scaling" lattices as described above.

The first primary laser beam and the second primary laser beam may each define a primary-beam focal plane and preferably the crossing occurs out of said primary-beam focal planes, i.e. "out-of-focus".

Similarly, the first auxiliary laser beam and the second auxiliary laser beam may each define an auxiliary-beam focal plane and preferably the crossing occurs out of said auxiliary-beam focal planes, i.e. "out-of-focus".

By creating the primary optical lattice and/or the auxiliary optical lattice "out-of-focus", a larger spatial area may be covered by the respective optical lattice than if the optical lattice was created at a crossing of the focal planes, thus allowing for a larger number of potential minima to occur at the crossing and thus allowing for a larger number of particles that may be trapped in the optical lattice. Potential gradients originating from the beams being out of focus may be compensated with the array-generating optical lattice used as an optical trap for creating the Mott insulator or an additional trap (e.g. an additional red detuned laser beam). This additional trap may provide confinement in the first propagation plane, perpendicular to the optical lattice.

To create the primary optical lattice and the auxiliary optical lattice, the method may comprise:

> providing a first input laser beam;
> providing a second input laser beam;
> sending the first input laser beam through a first acousto-optic deflector;
> sending the second input laser beam through a second acousto-optic deflector;
> driving each of the first and second acousto-optic deflectors by a driving signal comprising a superposition of a primary driving signal having a primary driving frequency with an auxiliary driving signal having an auxiliary driving frequency, thereby
> generating a first primary laser beam and a first auxiliary laser beam from the first input laser beam and generating a second primary laser beam and a second auxiliary laser beam from the second input laser beam;
> crossing the first primary laser beam with the second primary laser beam to form the primary optical lattice;
> crossing the first auxiliary laser beam with the second auxiliary laser beam to form the auxiliary optical lattice.

The term "acousto-optical deflector" refers to a device comprising a material in which an ultrasound grating may be created and on which ultrasound grating a laser beam may be diffracted, thereby generating a plurality of diffracted beams. The ultrasound grating is generated by the acousto-optic effect, i.e. by inducing a periodic change of the refractive index of the material due to an ultrasound standing wave which causes periodic strain of the material. To generate the ultrasound standing wave, a piezoelectric transducer may be attached to the material, which piezoelectric transducer may be driven by a radio-frequency signal having an amplitude and a frequency. By changing the frequency, a grating constant of the ultrasound grating may be changed, thus changing the angles under which the diffracted beams exit the acousto-optical deflector. By changing the amplitude, the optical power carried by the diffracted beams may be changed.

Changing the primary-lattice spacing may thus comprise varying the primary driving frequency, and changing the auxiliary-lattice spacing may comprise varying the auxiliary driving frequency.

Preferably, the primary driving signal has a primary amplitude and the second signal has an auxiliary amplitude,

wherein decreasing or increasing the primary-lattice maximum potential depth may comprise varying the primary amplitude, and
wherein decreasing or increasing the auxiliary-lattice maximum potential depth may comprise varying the auxiliary amplitude.

In order to ensure that the first input laser beam and the second laser beam have the same wavelength and are mutually coherent, the method may further comprise:

providing a common source laser beam;
splitting the common source laser beam using a beam splitter to obtain the first input laser beam and the second input laser beam.

In particular, the beam splitter may be a polarizing beam splitter, causing the first input laser beam to be orthogonally polarized with respect to the second input laser beam after the beam splitter. In order to ensure that the laser beams used to form the primary optical lattice and/or the auxiliary optical lattice have the polarization required to enable them to interfere, the optical setup may comprise polarization optics, in particular half-wave plates.

In a second aspect, the present invention provides a device for performing the method of the first aspect of the invention, the device comprising:

an optical setup configured to generate a primary optical lattice comprising periodically arranged optical potential minima spaced by a primary-lattice spacing and having a primary-lattice maximum potential depth, and to generate an auxiliary optical lattice comprising periodically arranged optical potential minima spaced by an auxiliary-lattice spacing and having auxiliary-lattice maximum potential depth,
wherein a plurality of the optical potential minima of the primary optical lattice is spatially alignable with a plurality of the optical potential minima of the auxiliary lattice, and
a tuning means, wherein the tuning means is configured to tune the primary-lattice maximum potential depth and the auxiliary-lattice maximum potential depth, and is further configured to tune the primary-lattice spacing and/or the auxiliary-lattice spacing.

The optical setup may comprise:
a laser source, wherein the primary optical lattice and the auxiliary optical lattice are each formed by at least one pair of laser beams crossing under an angle, the at least one pair of laser beams being derived from the laser source.

The tuning means may comprise:

a first acousto-optic deflector;
a second acousto-optic deflector, and
a driver unit configured to drive the first acousto-optic deflector and the second acousto-optic deflector.

Alternatively, instead of or in addition to acousto-optic deflectors, the tuning means may comprise a mechanical beam steering mechanism configured to mechanically tune the primary-lattice angle and/or the auxiliary lattice angle in order to change the primary-lattice spacing and/or the auxiliary lattice spacing, respectively.

Such a mechanical beam steering mechanism may comprise mirrors arranged on translation stages and/or lenses with variable focal length and/or galvanic mirrors.

Alternatively or in addition, the tuning means may comprise wavelength tuning means to tune a primary wavelength of the light used to generate the primary optical lattice to change the primary-lattice spacing and/or to tune an auxiliary wavelength of the light used to generate the auxiliary optical lattice to change the auxiliary lattice spacing.

The driver unit may be configured to provide a driving signal comprising a superposition of a primary driving signal having a primary driving frequency with an auxiliary driving signal having an auxiliary driving frequency.

The driver unit may in particular comprise at least one frequency generator for generating the driving signal.

By using a driving signal comprising both the primary-lattice frequency and the auxiliary-lattice frequency, both a primary ultrasound grating and an auxiliary ultrasound grating may be established in the same acousto-optic deflector, which enables - from one laser input laser beam - the generation of a primary laser beam corresponding to a diffraction order, preferably (but not necessarily) the +1st diffraction order or the -1st diffraction order of the primary ultrasound grating, and the generation of an auxiliary laser beam corresponding to a diffraction order, preferably (but not necessarily) the +1st diffraction order or the -1st diffraction order of the auxiliary ultrasound grating.

Furthermore, the driver unit may comprise a control unit, the control unit comprising a computer or an FPGA to control the at least one frequency generator.

The optical setup may further comprise focusing optics to focus the pairs of lasers beams which may be used to create the primary optical lattice and/or the auxiliary optical lattice.

Furthermore, the optical setup may comprise collecting optics and/or a detector, wherein the collecting optics may be arranged in order to image the primary optical lattice and/or the auxiliary optical lattice onto the detector. The detector may for instance be a CCD camera, which may enable obtaining images that directly visualize the primary optical lattice and/or the auxiliary optical lattice and/or the particles trapped in them.

The detector may be connected to the control unit and the control unit may be configured to deliver a feedback signal to at least one of the frequency generators based on a detector signal received from the detector.

BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,

Fig. 1     shows steps of a method for creating a periodical particle array according to prior art;
Fig. 2     shows steps of a method for changing an inter-particle distance between particles arranged in a particle array according to an embodiment of the present invention;
Fig. 3     shows a one-dimensional optical lattice obtained by crossing a pair of laser beams;
Fig. 4     shows an optical potential as a function of position, corresponding to a cut along the optical lattice of Fig. 3;
Fig. 5     shows a first embodiment of the method according to the present invention;
Fig. 6     shows a second embodiment of the method according to the present invention;
Fig. 7     shows a device according to an embodiment the present invention;
Fig. 8     shows an enlarged detailed view of an excerpt of the device of Fig. 7;
Fig. 9     shows tuning curves as a function of time, and
Fig. 10    shows a measured experimental image of a primary optical lattice and an auxiliary optical lattice as a function of time.

DESCRIPTION OF PREFERRED EMBODIMENTS

Prior art

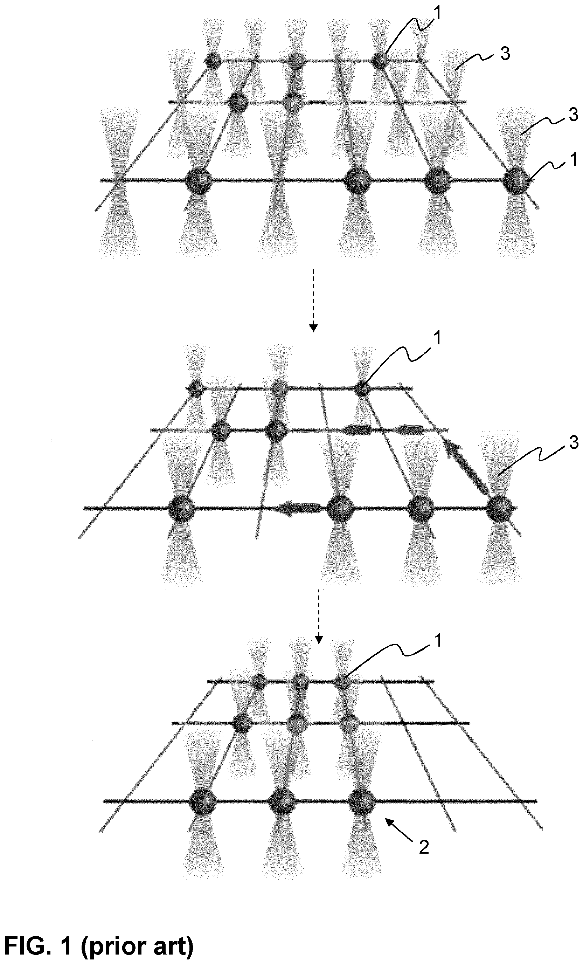

Fig. 1 illustrates, in a schematic manner, a method for creating a periodical particle array known in the prior art. At first, (top of Fig. 1) an array of optical tweezers 3 is provided and the particles 1 are loaded into the array of optical tweezers 3 based on a probabilistic approach, resulting in a random distribution of particles across the array of optical tweezers. In a second step (middle of Fig. 1) the optical tweezers in which no particle is trapped, are switched off. Subsequently, the optical tweezers in which a particle is trapped are spatially rearranged such that the particles ultimately form a periodic particle array 2, as depicted in the bottom of Fig. 1. While it is possible to arbitrarily set the inter-particle spacing by moving each optical tweezer, the creation of large particle arrays is very time consuming. Given the finite lifetimes of the particles and/or the finite lifetimes of the particle states in the tweezers, this limits the maximal array size that can be achieved.

Preferred embodiments

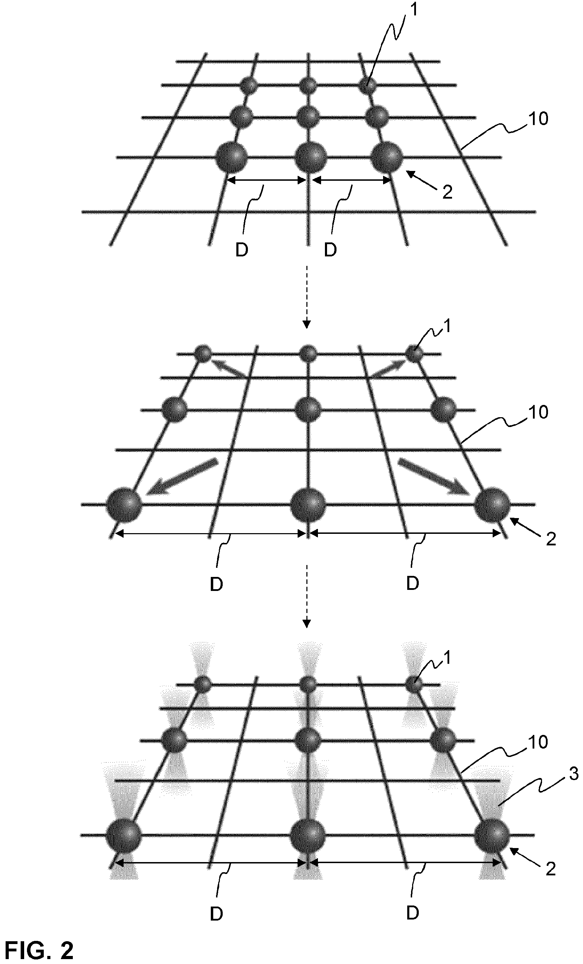

Fig. 2 illustrates, in a schematic manner, steps of a method for changing an inter-particle distance D between particles 1 arranged in a particle array according to embodiments the present invention. At the top of Fig. 2, a particle array is depicted, where the particles 1 are located in a two-dimensional primary optical lattice 10. The crossings of the grid lines drawn in Fig. 2 symbolize regions of minimum optical potential, i.e. locations at which the particles can be trapped. The middle of Fig. 2 depicts a situation where the particles have each been moved to a neighbouring optical potential minimum by using an auxiliary optical lattice as will be explained further below, the inter-particle distance D thus having been increased by a factor of two in this example. At the bottom of Fig. 2, an array of optical tweezers 3 is shown, wherein each optical tweezer 3 is trapping exactly one particle. Since the particles 1 are already arranged in a periodic array without any defects, the optical tweezers 3 do not need to be moved around to create the desired defect-free particle array in contrast to the method shown in Fig. 1.

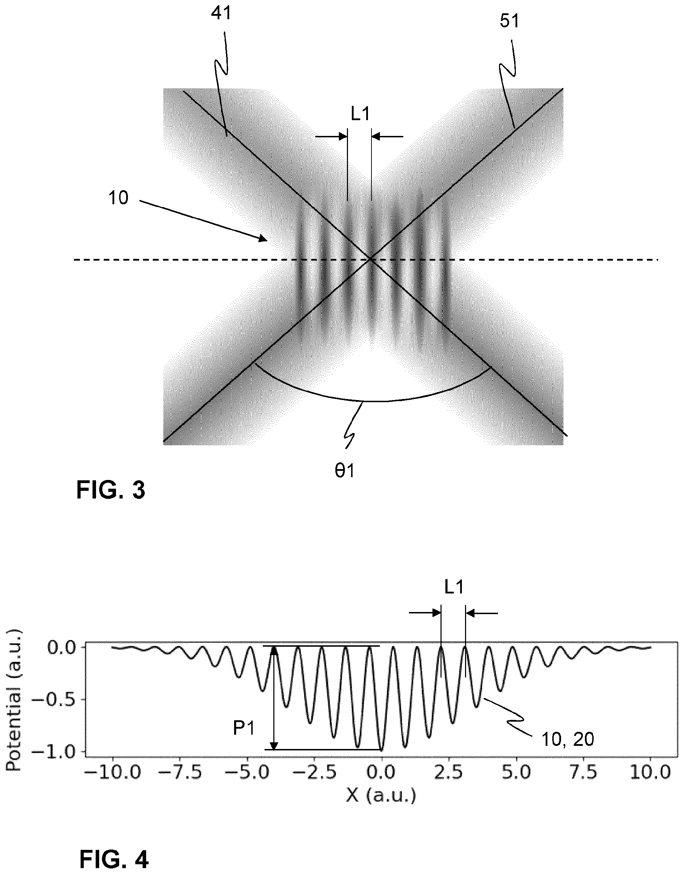

Fig. 3 shows how a one-dimensional optical lattice (in this example labelled as the primary optical lattice 10) may be obtained by crossing a first primary laser beam 41 with a second primary laser beam 51 both having the same laser wavelength $\lambda$, under an angle $\theta 1$. Note the descriptions of Fig. 3 and Fig. 4 provided here apply mutatis mutandis to an auxiliary lattice 20 obtained by crossing a first auxiliary laser beam 42 with a second auxiliary laser beam 52 both having the same laser wavelength $\lambda$, under an angle $\theta 2$.

Provided that the polarization of the electric field of the first primary laser beam 41 is not orthogonal to the polarization of the electric field of the second primary laser beam 51, an interference pattern is obtained, the interference pattern being most pronounced when the polarization of the electric field of the first primary laser beam 41 is the same as for the second primary laser beam 51. The interference pattern forms an optical lattice, i.e. a periodic potential landscape for a particle having a particle resonance wavelength $\lambda_0$. In a "red-detuned" situation, i.e. in case the laser wavelength A is longer than the particle resonance wavelength $\lambda_0$, the points of maximum optical intensity correspond to potential minima in which the particle may be trapped. Alternatively, in a "blue-detuned" situation, i.e. in case the laser wavelength A is shorter than the particle resonance wavelength $\lambda_0$, points of minimum optical intensity correspond to potential minima in which the particle may be trapped.

The potential curve, i.e. the primary optical lattice 10 resulting from the interference of the first primary laser beam 41 and the second primary laser beam 51 along the X-axis marked as a dashed line in Fig. 3 is shown in Fig. 4. The primary optical lattice 10 comprises potential minima that are spaced by a primary-lattice spacing L1 which depends on the angle $\theta$1 under which the beams are crossing. For a fixed value of the angle $\theta$1, the primary-lattice spacing L1 is constant across the entire optical lattice 10. The potential depth of each minimum may however vary across the optical lattice 10 due to the intensity distribution across the profiles of the laser beams. Typical laser beams may for instance have a Gaussian intensity profile in a plane orthogonal to their propagation direction, i.e. with a high optical intensity at the centre of the laser beam and lower intensity in the wings of the laser beam. Hence, the potential depth in regions of the optical lattice 10 which are created by the wings of the laser beams will be smaller than in a region of the lattice 10 that corresponds to the center of the laser beams, where the optical lattice 10 has a primary-lattice maximum potential depth P1 as shown in Fig. 4.

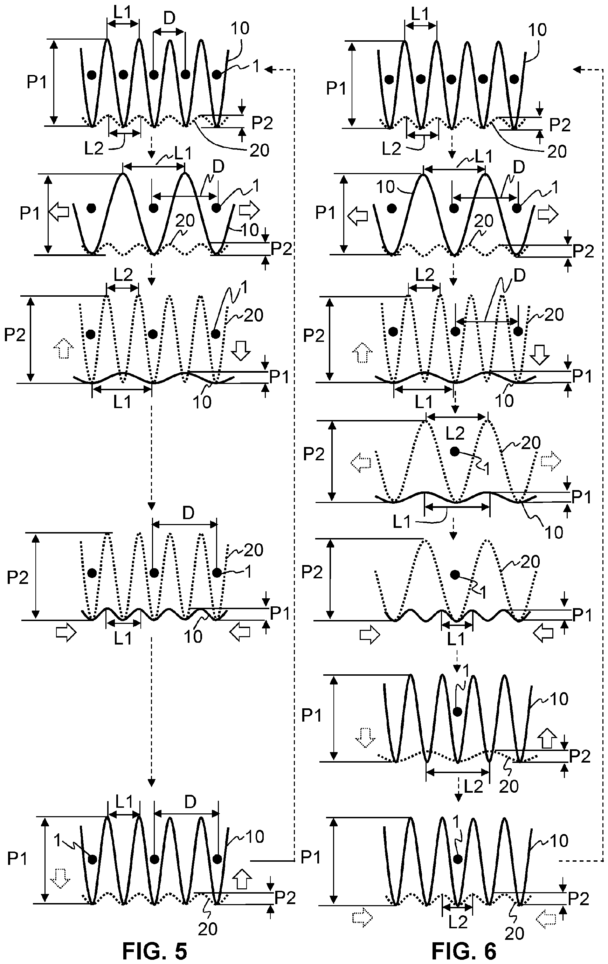

Fig. 5 shows a method for changing an inter-particle distance D according to a first embodiment of the invention. Initially, the particle array 2 comprising the particles 1 is trapped in a primary optical lattice 10, which comprises periodically arranged optical potential minima spaced by a primary-lattice spacing L1 and which has a maximum potential depth P1. An auxiliary optical lattice 20, which comprises periodically arranged optical potential minima spaced by an auxiliary-lattice spacing L2 and which has an auxiliary-lattice maximum potential depth P2, is also provided, however, the auxiliary-lattice maximum potential depth P2 is initially smaller than a threshold potential depth at which the particles 1 become trapped, i.e. it is initially significantly smaller than the maximum potential depth P1 as shown at the top of Fig. 5. The primary optical lattice 10 and the auxiliary optical lattice 20 may be created by pairs of crossing beams as shown in Fig. 3. As shown in Fig. 5, the primary optical lattice 10 spatially overlaps with the auxiliary optical lattice 20 such that a plurality (in this idealized example all) of the optical potential minima of the primary optical lattice 10 is aligned with a plurality (in this idealized example all) of the optical potential minima of the auxiliary lattice 20.

In a first step, the primary-lattice spacing L1 is changed, in this example increased, to change, i.e. here to increase the inter-particle distance D of the trapped particles 1 by an exemplary factor of two.

In a second step, the auxiliary-lattice maximum potential depth P2 is increased and the primary-lattice maximum potential depth P1 is decreased until the primary-lattice maximum potential depth P1 is smaller than the threshold potential depth and the particles 1 are now trapped in the auxiliary optical lattice 20.

In this first embodiment of the method shown in Fig. 5, the auxiliary optical lattice 20 acts as a "pinning" optical lattice, i.e. it holds ("pins") the particles in place, while in a third step, the primary-lattice spacing L1 of the primary optical lattice 10 is set to a different primary-lattice spacing value, in this particular example reset to its initial value.

In a fourth step, the primary-lattice maximum potential depth P1 is increased again and the auxiliary-lattice maximum potential depth P2 is decreased until the auxiliary-lattice maximum potential depth P2 is smaller than the threshold potential depth and the particles are trapped in the primary optical lattice 10 again as shown at the bottom of Fig. 5, which corresponds to the situation depicted in the middle of Fig. 2, but shown along one dimension only.

As indicated by the dashed arrow in Fig. 5, these steps may be repeated an arbitrary number of times to keep changing, in particular increasing, the inter-particle spacing D.

Fig. 6 shows a method according to a second embodiment of the invention in which the auxiliary optical lattice acts as a "scaling" optical lattice instead of a "pinning" optical lattice. This second embodiment of the method comprises two more steps in addition to the steps of the first embodiment of the invention:

Between the second step and the third step, i.e. when the particles 1 are trapped in the auxiliary optical lattice 20, the method of the second embodiment comprises a step of changing the auxiliary-lattice spacing L2 to change, i.e. in this example to further increase, the inter-particle distance D. In this example, the inter-particle distance D is increased by an additional factor of two.

After the fourth step, i.e. when the particles 1 are trapped again in the primary optical lattice 10, the auxiliary-lattice spacing is set to a different auxiliary-lattice spacing value, in this particular example reset to its initial value.

All steps of the method according to this second embodiment may be repeated an arbitrary number of times to keep changing, in particular increasing, the inter-particle spacing D.

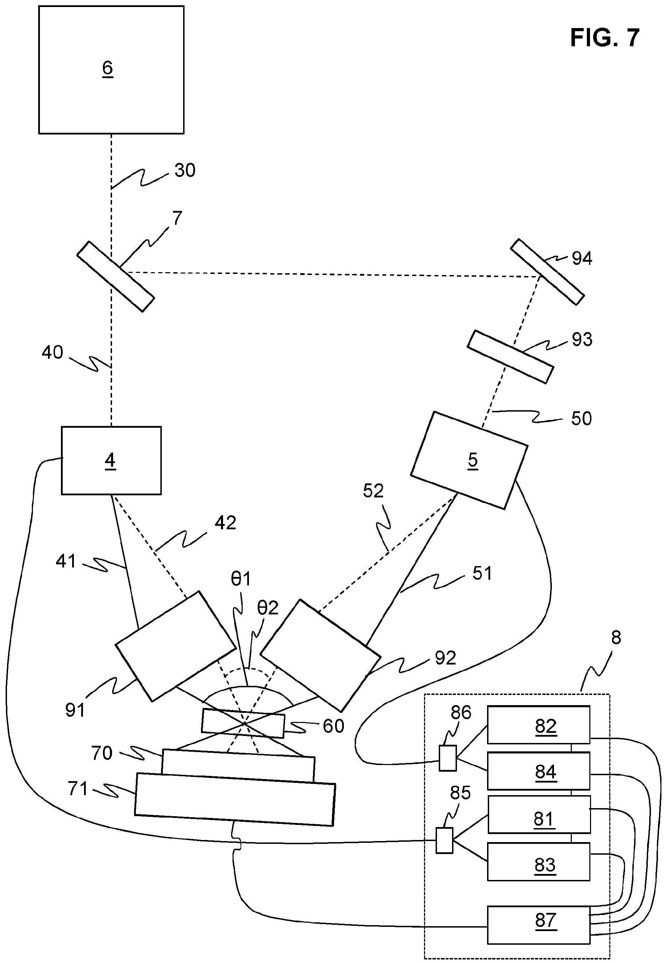

Fig. 7 shows an embodiment of a device for performing a method according to the invention, the device comprising an optical setup and tuning means. The optical setup comprises an optical laser source 6 emitting a common laser source beam 30. Said common laser source beam 30 is split by a beam splitter 7 into a first input laser beam 40 and a second input laser beam 50. The first input laser beam 40 is sent through a first acousto-optic deflector 4, while the second input laser beam 50 is sent through a second acousto-optic deflector 5. In order to direct the laser beams, routing mirrors 94 may be used, as exemplarily shown in Fig. 7, where a routing mirror 94 is used to direct the second input laser beam towards the second acousto-optic deflector 5. The tuning means comprise a driver unit 8 configured to drive the acousto-optic deflectors. In particular, the driver unit 8 may comprise a first primary frequency generator 81 and a second primary frequency generator 82, as well as a first auxiliary frequency generator 83 and a second auxiliary frequency generator 84. The first primary frequency generator 81 and the second primary frequency generator 82 are set to a primary frequency f1 and a primary amplitude A1, while the first auxiliary frequency generator 83 and the second auxiliary frequency generator 84 are set to an auxiliary frequency f2 and an auxiliary amplitude A2.

To provide a driving signal for the first acousto-optic deflector 4, the output signal of the first primary frequency generator 81 is combined with the output signal of the first auxiliary frequency generator 83 using a first combiner 85.

To provide a driving signal for the second acousto-optic deflector 5, the output signal of the second primary frequency generator 82 is combined with the output signal of the second auxiliary frequency generator 84 using a second combiner 86.

Since the first acousto-optic deflector 4 and the second acousto-optic deflector 5 are each driven by a driving signal that comprises the primary driving frequency f1 and the auxiliary driving frequency f2, a primary ultrasound grating associated with the primary driving frequency f1 and an auxiliary ultrasound grating associated with the auxiliary driving frequency f2 are generated in each of the acousto-optic deflectors 4,5.

The first input laser beam 40 is thus diffracted by both the primary ultrasound grating and the auxiliary ultrasound grating in the first acousto-optic deflector 4, wherein a first primary laser beam 41 associated with the primary ultrasound grating and a first auxiliary laser beam 42 associated with the auxiliary ultrasound grating are obtained. Preferably, the first primary laser beam 41 corresponds to a +1st-order or a -1st-order diffracted beam of the primary ultrasound grating and the first auxiliary laser beam 42 corresponds to a +1st-order or a - 1st-order diffracted beam of the auxiliary ultrasound grating in the first acousto-optic deflector.

Similarly, the second input laser beam 50 is diffracted by both the primary ultrasound grating and the auxiliary ultrasound grating in the second acousto-optic deflector 5, wherein a second primary laser beam 51 associated with the primary ultrasound grating and a second auxiliary laser beam 52 associated with the auxiliary ultrasound grating are obtained. Preferably, but not necessarily, the second primary laser beam 51 corresponds to +1st-order or a -1st-order diffracted beam of the primary ultrasound grating and the second auxiliary laser beam 52 preferably, but not necessarily, corresponds to a +1st-order or a -1st-order diffracted beam of the auxiliary ultrasound grating in the second acousto-optic deflector 5.

To obtain the spatial arrangement of primary/auxiliary laser beams 41,42,51,52 shown in Fig. 7, the acousto-optic deflector 5 is preferably rotated by 180° with respect to the acousto-optic deflector 4 around an incidence axis defined by the second input laser beam 50.

For the sake of clarity, beams corresponding to other diffraction orders and in particular also the non-diffracted zero-order beams exiting the first and the second acousto-optic deflectors 4,5 are not shown in Fig. 7.

The primary optical lattice 10 is then created by the first primary laser beam 41 and the second primary laser beam 51 crossing under a primary-lattice angle $\theta1$, and the auxiliary optical lattice 20 is created by the first auxiliary laser beam 42 and the second auxiliary laser beam 52 crossing under an auxiliary-lattice angle $\theta2$. In order for the optical lattices to be created, the crossing laser beams need to have the same polarization. In order to adjust the polarization of the laser beams, the optical setup may comprise polarization optics 93, such as for instance wave plates. In case the beam splitter 7 shown in Fig. 7 is a polarizing beam splitter, the polarization optics 93 arranged in Fig. 7 before the second acousto-optic deflector 5 is preferably a half-wave plate, which allows the polarization of the second input beam to be rotated such that it is the same polarization as the first input beam.

In this preferred embodiment, the first primary laser beam 41 and the first auxiliary laser beam 42 are focused using a first focusing optics 91, while the second primary laser beam 51 and the second auxiliary laser beam 52 are focused using a second focusing optics 92, the first focusing optics 91 and the second focusing optics preferably comprising at least one lens.

The primary-lattice angle $\theta1$ under which the first primary laser beam 41 and the second primary laser beam 51 are crossing depends on an incidence angle and an incidence position of the first primary laser beam 41 on the first focusing optics 91 and of the second primary laser beam 51 on the second focusing optics 92. Preferably, the first focusing optics 91 and the second focusing optics 92 are kept fixed in space. Thus, to change the primary-lattice angle $\theta1$, the primary driving frequency f1 may be tuned, which tunes the primary ultrasound grating in the first acousto-optic deflector 4 and the second acousto-optic deflector 5 and leads to a tuning of the diffraction angle under which the first primary laser beam 41 and the second primary laser beam 51 exit their respective acousto-optic deflectors 4,5.

A change in the primary lattice angle θ1 in turn leads to a change in the primary-lattice spacing L1. Thus, the primary-lattice spacing L1 can be changed by varying the primary driving frequency f1. The primary-lattice maximum potential depth P1 on the other hand can by changed by changing the primary amplitude A1.

In order to shift the position of the potential minima of the primary optical lattice 10 in space without changing the primary-lattice spacing L1, a phase shift may be imprinted on the output signal of the first primary frequency generator 81 with respect to the output signal of the second primary frequency generator 82 (which are both set to the primary frequency f1). This allows the primary optical lattice 10 to be aligned with respect to the auxiliary optical lattice 20, in particular to ensure that the primary optical lattice 10 spatially overlaps with the auxiliary optical lattice 20 such that a plurality of the optical potential minima of the primary optical lattice 10 is aligned with a plurality of the optical potential minima of the auxiliary lattice 20. Alternatively, instead of having a first primary frequency generator 81 and a second primary frequency generator 82, it is conceivable to use a single common primary frequency generator set to the primary frequency f1, which drives both the first and the second acousto-optic deflector 4,5. In this case, shifting the position of the potential minima of the primary optical lattice 10 in space without changing the primary-lattice spacing L1 may be accomplished by other means.

The same statements of course apply mutatis mutandis to the tuning of the lattice spacing, the tuning of the potential depth and the shifting in space of the auxiliary optical lattice 20 that is obtained by crossing the first auxiliary laser beam 42 and the second auxiliary laser beam 52 crossing under the auxiliary-lattice angle θ2.

The frequency generators 81,82,83,84 (not necessarily four) may be connected to each other (e.g. in a daisy chain) or to a common reference clock (not shown in Fig. 7) so that the phase stability of the primary/auxiliary driving frequencies f1,f2 can be ensured, which ultimately impacts the stability of the primary/auxiliary optical lattices 10,20.

The driver unit 8 may further comprise a control unit 87 to control the frequency generators 81,82,83,84, in particular to orchestrate tuning of the driving frequencies f1,f2 and the amplitudes A1,A2 in order to perform the method for changing an inter-particle distance of the present invention.

The device may further comprise a vacuum chamber 60 and the primary optical lattice 10 and the auxiliary optical lattice 20 may be arranged inside said vacuum chamber 60. Such a vacuum chamber 60 is in particular needed if the particle array 2 to be manipulated is created from a gas of cold atoms, e.g. if the particle array is initially a Mott insulator. The device may further comprise means to create the particle array 2, such as a source of atoms, a Zeeman slower, several beams for laser cooling/re-pumping, a magneto-optical trap (MOT) and potentially one, two or three additional pairs of laser beams to create the Mott insulator by crossing quantum phase transition from a superfluid to a Mott insulator.

The optical setup shown in Fig. 7 further comprises a collecting optics 70, which may be a lens or an objective, and a detector 71, for instance a CCD-based camera, wherein the collecting optics 70 is arranged such as to image the optical lattices 10,20 onto the detector 71 e.g. to obtain relative phase information. The detector 71 may be coupled to the control unit 87. The control unit 87 may comprise a computer and/or FPGA to analyze images obtained from the detector 71 and provide feedback to the frequency generators 81,82,83,84. Alternatively, the device may comprise an interferometer to provide information about the optical lattices 10,20.

Furthermore, the optical setup may comprise an array of optical tweezers (not shown in Fig 7), into which the particle array 2 may be loaded, e.g. for the particles be used as qubits to perform quantum computing operations such as gate, storage and readout operations.

The optical tweezers may trap the particles 1 in a direction that is perpendicular to the drawing plane in Fig. 7. However, a different orientation of the optical tweezers is also possible.

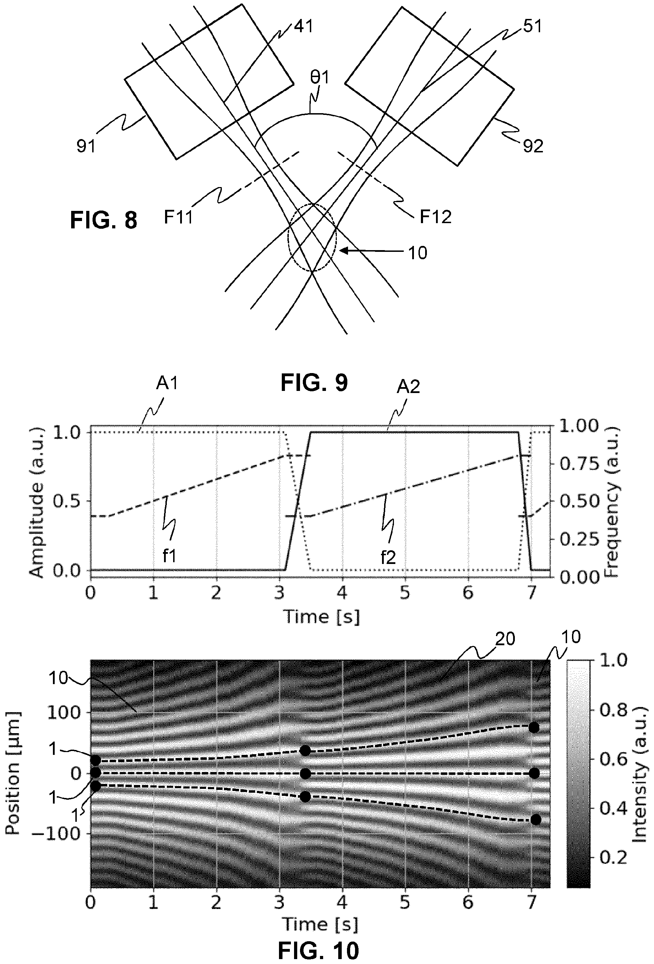

In a preferred embodiment, the primary optical lattice 10 and the auxiliary optical lattice 20 are created out-of-focus. In other terms, after passing through the first focusing optics 91, the first primary laser beam 41 defines a first primary beam focal plane F11, while the second primary laser beam 51 defines a second primary beam focal plane F12 after passing through the second focusing optics 92. Ideally, the crossing of first primary laser beam 41 and the second primary laser beam 51 occurs out of said primary-beam focal planes F11, F12, as schematically shown in Fig. 8, in order to allow for a larger spatial area (schematically indicated by a dotted line in Fig. 8) to be covered by the primary optical lattice 10, which allows more particles to be held in the primary optical lattice 10 than if the optical lattice 10 was created in an overlap of the primary beam focal planes F11, F12. Analogously (omitted in Fig. 8 for simplicity), after passing through the first focusing optics 91, the first auxiliary laser beam 42 defines a first primary beam focal plane F21, while the second auxiliary laser beam 52 defines a second primary beam focal plane F22 after passing through the second focusing optics 92 and the crossing preferably occurs out of said auxiliary-beam focal planes F21, F22.

Fig. 9 shows tuning curves as a function of time corresponding to the second embodiment of the method of the present invention shown in Fig. 6, while Fig. 10 shows a measured experimental image of the primary optical lattice 10 and the auxiliary optical lattice 20 over the same time scale as in Fig. 8. At time "0", the primary amplitude A1 (dotted curve) is set to a maximum amplitude value (here, a normalized value of 1.0), while the auxiliary amplitude A2 (continuous line) is set to zero, i.e. the auxiliary ultrasound grating in the first and the second acousto-optic deflectors 4,5 is switched off, and hence the auxiliary optical lattice 20 is switched off. The primary frequency f1 (dashed line) is set to an initial value at time "0", leading to an initial primary-lattice spacing L1. Subsequently, the primary frequency f1 is ramped up to reach a maximum frequency value, thereby leading to an increase of the primary-lattice spacing L1. Once the maximum primary-frequency value is reached, the auxiliary amplitude A2 is increased from zero to the maximum amplitude value, while the auxiliary frequency f2 (dashed-dotted line) is set to the same value as the initial value of the primary frequency f1. At the same time, the primary amplitude A1 is decreased from the maximum amplitude value down to zero, which corresponds to switching off the primary ultrasound grating in first and the second acousto-optic deflectors 4,5. The particles 1, three of which have been symbolically added to Fig. 10 as black dots, were trapped in the primary optical lattice 10 at time "0" in regions of lowest potential (i.e. corresponding in the "red-detuned" case depicted here to regions of maximum optical intensity) and are now trapped in the auxiliary optical lattice 20, whereas the primary optical lattice 10 has been switched off. The auxiliary-lattice spacing L2 is then increased by ramping up the auxiliary frequency f2 until the latter reaches the maximum frequency value, at which point in time the primary optical lattice 10, with its primary-lattice spacing L1 having been reset to its initial value by resetting the primary frequency f1, is now turned back on again by ramping up the primary amplitude A1. The auxiliary amplitude A2 is meanwhile decreased until the auxiliary optical lattice 20 is switched off and the particles 1 are trapped by the primary optical lattice 10 again.

Arbitrary tuning patterns of the inter-particle distance D may be obtained by controlling the primary frequency f1/primary amplitude A1 and/or the auxiliary frequency f2/auxiliary amplitude A2 accordingly. In particular, the inter-particle distance D may be increased to a value that is sufficient for the particles 1 to be individually accessible by optical tweezers. Alternatively, an arbitrary particle pattern with initially large inter-particle distances may be miniaturized by inverting the process shown in Fig. 9 and Fig. 10.

LIST OF REFERENCE SIGNS

| | | | | |
|---|---|---|---|---|
| 1 | particles | 30 | common laser source beam | |
| 2 | particle array | 40 | first input laser beam | |
| 3 | array of optical tweezers | 41 | first primary laser beam | |
| 4 | first acousto-optic deflector | 42 | first auxiliary laser beam | |
| 5 | second acousto-optic deflector | 50 | second input laser beam | |
| | | 51 | second primary laser beam | |
| 6 | laser source | 52 | second auxiliary laser beam | |
| 7 | beam splitter | 60 | vacuum chamber | |
| 8 | driver unit | 70 | collecting optics | |
| 91 | first focusing optics | 71 | detector | |
| 92 | second focusing optics | D | inter-particle distance | |
| 93 | polarization optics | L1 | primary-lattice spacing | |
| 94 | routing mirror | L2 | auxiliary-lattice spacing | |
| 81 | first primary frequency generator | A1 | primary amplitude | |
| | | A2 | auxiliary amplitude | |
| 82 | second primary frequency generator | P1 | primary-lattice maximum potential depth | |
| 83 | first auxiliary frequency generator | P2 | auxiliary-lattice maximum potential depth | |
| 84 | second auxiliary frequency generator | $\theta 1$ | primary-lattice angle | |
| | | $\theta 2$ | auxiliary-lattice angle | |
| 85 | first combiner | f1 | primary driving frequency | |
| 86 | second combiner | f2 | auxiliary driving frequency | |
| 87 | control unit | F1 | primary focal plane | |
| 10 | primary optical lattice | F2 | auxiliary focal plane | |
| 20 | auxiliary optical lattice | | | |

## Claims

1. A method for changing an inter-particle distance (D) between particles (1) arranged in a particle array (2), the method comprising:

a) creating a primary optical lattice (10) comprising periodically arranged optical potential minima spaced by a primary-lattice spacing (L1) and having a primary-lattice maximum potential depth (P1);

b) loading the particles (1) into the primary optical lattice (10) such that the particles (1) are trapped in the primary optical lattice (10);

c) changing the primary-lattice spacing (L1) to change the inter-particle distance (D);

d) creating an auxiliary optical lattice (20) comprising periodically arranged optical potential minima spaced by an auxiliary-lattice spacing (L2) and having auxiliary-lattice maximum potential depth (P2);

wherein the primary optical lattice (10) spatially overlaps with the auxiliary optical lattice (20) such that a plurality of the optical potential minima of the primary optical lattice (10) is aligned with a plurality of the optical potential minima of the auxiliary lattice (20);

e) increasing the auxiliary-lattice maximum potential depth (P2) until the particles (1) are trapped in the auxiliary optical lattice (20) and decreasing the primary-lattice maximum potential depth (P1) until the primary-lattice maximum potential depth (P1) is smaller than a threshold potential depth at which the particles become trapped;

f) setting the primary-lattice spacing (L1) to a different primary-lattice spacing value at which a plurality of the optical potential minima of the primary optical lattice are again aligned with a plurality of the optical potential minima of the auxiliary lattice;

g) increasing the primary-lattice maximum potential depth (P1) until the particles are trapped in the primary optical lattice (10) again and decreasing the auxiliary-lattice maximum potential depth (P2) until the auxiliary-lattice maximum potential depth (P2) is smaller than the threshold potential depth.

2. The method of claim 1, further comprising repeating step c) after step g), and/or comprising, between steps e) and g), a step of changing the auxiliary-lattice spacing (L2) to change the particle distance (D).

3. The method of claim 2, further comprising, after step g), a step of setting the auxiliary-lattice spacing (L2) to a different auxiliary-lattice spacing value.

4. The method of any one of the preceding claims, wherein the primary-lattice spacing (L1) is increased in step c) so that the inter-particle distance (D) increases.

5. The method of any one of the preceding claims, wherein the particle array (2) being loaded into the primary optical lattice in step b) is an array of atoms, preferably a defect-free array of atoms.

6. The method of any one of the preceding claims, further comprising:

   providing an array of multiple optical tweezers (3);
   loading at least a portion of the particle lattice (2) into the array of multiple optical tweezers (3).

7. The method of claim 6, further comprising performing a quantum computing operation using the particles trapped in the array of multiple optical tweezers (3).

8. The method of any one of the preceding claims,

   wherein the primary optical lattice (10) is created by at least a first primary laser beam (41) and a second primary laser beam (51) crossing under a primary-lattice angle ($\theta$1), and
   wherein the auxiliary optical lattice (20) is created by at least a first auxiliary laser beam (42) and a second auxiliary laser beam (52) crossing under an auxiliary-lattice angle ($\theta$2).

9. The method of claim 8, wherein the first primary laser beam (41) and the second primary laser beam (51) each define a primary-beam focal plane (F11, F12) and wherein the crossing occurs out of said primary-beam focal planes (F11, F12), and/or wherein the first auxiliary laser beam (42) and the second auxiliary laser beam (52) each define an auxiliary-beam focal plane (F21, F22) and wherein the crossing occurs out of said auxiliary-beam focal planes (F21, F22).

10. The method of claim 8 or 9, wherein to create the primary optical lattice (10) and the auxiliary optical lattice (20) the method comprises:

   providing a first input laser beam (40);

providing a second input laser beam (50);

sending the first input laser beam (40) through a first acousto-optic deflector (4);

sending the second input laser beam (50) through a second acousto-optic deflector (5);

driving each of the first and second acousto-optic deflector (4,5) by a driving signal comprising a superposition of a primary driving signal having a primary driving frequency (f1) and an auxiliary driving signal having an auxiliary driving frequency (f2), thereby

generating a first primary laser beam (41) and a first auxiliary laser beam (42) from the first input laser beam (40) and generating a second primary laser beam (51) and a second auxiliary laser beam (52) from the second input laser beam (50);

crossing the first primary laser beam (41) with the second primary laser beam (51) to form the primary optical lattice (10);

crossing the first auxiliary laser beam (42) with the second auxiliary laser beam (52) to form the auxiliary optical lattice (20).

11. The method of claim 10, wherein the method comprises:

providing a common source laser beam (30);

splitting the common source laser beam (30) using a beam splitter (7) to obtain the first input laser beam (40) and the second input laser beam (50).

12. The method of claim 10 or 11,

wherein changing the primary-lattice spacing (L1) comprises varying the primary driving frequency (f1), and wherein changing the auxiliary-lattice spacing (L2) comprises varying the auxiliary driving frequency (f2).

13. The method of any one of claims 10 to 12,

wherein the primary driving signal has a primary amplitude (A1) and the auxiliary signal has an auxiliary amplitude (A2),

wherein decreasing or increasing the primary-lattice maximum potential depth (P1) comprises varying the primary amplitude (A1), and

wherein decreasing or increasing the auxiliary-lattice maximum potential depth (P2) comprises varying the auxiliary amplitude (A2).

14. A device for performing the method of any one of claims 1 to 13, the device comprising:

an optical setup configured to generate a primary optical lattice (10) comprising periodically arranged optical potential minima spaced by a primary-lattice spacing (L1) and having a primary-lattice maximum potential depth (P1), and to generate an auxiliary optical lattice (20) comprising periodically arranged optical potential minima spaced by an auxiliary-lattice spacing (L2) and having an auxiliary-lattice maximum potential depth (P2),

wherein a plurality of the optical potential minima of the primary optical lattice (10) is spatially alignable with a plurality of the optical potential minima of the auxiliary lattice (20), and

a tuning means, wherein the tuning means is configured to tune the primary-lattice maximum potential depth (P1) and the auxiliary-lattice maximum potential depth (P2), and is further configured to tune the primary-lattice spacing (L1) and/or the auxiliary-lattice spacing (L2).

15. The device of claim 14,
wherein the optical setup comprises:

a laser source (6), wherein the primary optical lattice (10) and the auxiliary optical lattice (20) are each formed by at least one pair of laser beams (41, 42, 51, 52) crossing under an angle ($\theta$1,$\theta$2), the at least one pair of laser beams (41, 42, 51, 52) being derived from the laser source (6);

and wherein the tuning means comprise:

a first acousto-optic deflector (4);
a second acousto-optic deflector (5), and
a driver unit (8) configured to drive the first acousto-optic deflector (4) and the second acousto-optic deflector (5).

**FIG. 1 (prior art)**

**FIG. 2**

FIG. 3

FIG. 4

**FIG. 5**

**FIG. 6**

FIG. 7

**FIG. 8**

**FIG. 9**

**FIG. 10**

Europäisches Patentamt

European Patent Office

Office européen des brevets

**EUROPEAN SEARCH REPORT**

Application Number

EP 22 18 8223

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MARTIN SHOTTER: "Design of a technique to measure the density of ultracold atoms in a short-period optical lattice in three dimensions with single atom sensitivity", ARXIV.ORG, CORNELL UNIVERSITY LIBRARY, 201 OLIN LIBRARY CORNELL UNIVERSITY ITHACA, NY 14853, 25 November 2010 (2010-11-25), XP080464671, DOI: 10.1103/PHYSREVA.83.033617 * page 1 - page 4 * | 1-15 | INV. G06N10/40 |
| A | AARON W YOUNG ET AL: "Tweezer-programmable 2D quantum walks in a Hubbard-regime lattice", ARXIV.ORG, CORNELL UNIVERSITY LIBRARY, 201 OLIN LIBRARY CORNELL UNIVERSITY ITHACA, NY 14853, 2 February 2022 (2022-02-02), XP091149590, * figures 1-3 * * page 1 * | 1,6,7,14 | |

TECHNICAL FIELDS SEARCHED (IPC)

G06N

The present search report has been drawn up for all claims

| Place of search | Date of completion of the search | Examiner |
|---|---|---|
| The Hague | 10 January 2023 | De Meyer, Arnaud |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S. EBADI et al.** Quantum phases of matter on a 256-atom programmable quantum simulator. *Nature,* 2021, vol. 595, 227-232

- **K. KWON et al.** Site-resolved imaging of a bosonic Mott insulator of Li atoms. *Phys. Rev. A,* 2022, vol. 105, 033323